# EUROPEAN PATENT APPLICATION

(11) **EP 4 177 283 A1**
(43) Date of publication of application: **10.05.2023**
(21) Application number: 21833109.8
(22) Date of filing: 06.05.2021
(51) Int. Cl.: C08F 290/06, G02B 6/44

(54) **RESIN COMPOSITION, OPTICAL FIBER, AND METHOD FOR PRODUCING OPTICAL FIBER**

(30) Priority: 02.07.2020 JP 2020115070
(71) Applicant: SUMITOMO ELECTRIC INDUSTRIES, LTD., Osaka-shi, Osaka 541-0041 (JP)
(72) Inventor: HOMMA, Yuya, Osaka-shi, Osaka 541-0041 (JP)
(74) Representative: Hoffmann Eitle
(86) International application number: PCT/JP2021/017386
(87) International publication number: WO 2022/004122

(57) **Abstract**

A resin composition for secondary coating of an optical fiber contains a photopolymerizable compound and a photopolymerization initiator, wherein the photopolymerizable compound contains: a urethane (meth)acrylate that is a reaction product of a polyol having a number average molecular weight of 300 or more and 1200 or less, a diisocyanate, and a hydroxyl group-containing (meth)acrylate; a bisphenol skeleton-containing (meth)acrylate; and a monofunctional (meth)acrylate in which a glass transition temperature of a homopolymer of the monofunctional (meth)acrylate is -60°C or more and 15°C or less; and when the resin composition is ultraviolet-cured under conditions of an accumulated amount of light of 1000 mJ/cm² and an illumination of 1000 mW/cm² to form a resin film, the Young's modulus of the resin film is 1200 MPa or more and 3000 MPa or less at 23°C, and the glass transition temperature of the resin film is 70°C or more and 105°C or less.

## Description

### Technical Field

The present disclosure relates to a resin composition for secondary coating of an optical fiber, an optical fiber, and a method for producing the optical fiber.

The present application claims the priority based on Japanese application No. 2020-115070, filed on July 2, 2020, and the content described in the Japanese application is incorporated herein in its entirety.

### Background Art

A demand for high-density cables, in which the packing densities of optical fibers are enhanced, is increasing in data center applications in recent years. An optical fiber commonly comprises a coating resin layer for protecting a glass fiber that is an optical transmission medium. For example, the coating resin layer comprises two layers that are a primary resin layer in contact with the glass fibers and a secondary resin layer formed on the outer layer of the primary resin layer. When the packing density of an optical fiber increases, external force (lateral pressure) is applied to the optical fiber, and the microbend loss easily increases. It is known that the Young's modulus of a primary resin layer is reduced, and the Young's modulus of a secondary resin layer is increased to improve the lateral pressure characteristic of an optical fiber. For example, it is disclosed in Patent Literatures 1 to 3 that the secondary resin layers of optical fibers are formed using resin compositions containing specific photopolymerizable compounds.

### Citation List

### Patent Literature

Patent Literature 1: JP 2005-121772 A
Patent Literature 2: JP 2012-57124 A
Patent Literature 3: JP 2016-98127 A

### Summary of Invention

A resin composition for secondary coating of an optical fiber according to one embodiment of the present disclosure contains a photopolymerizable compound and a photopolymerization initiator, wherein the photopolymerizable compound contains: a urethane (meth)acrylate that is a reaction product of a polyol having a number average molecular weight of 300 or more and 1200 or less, a diisocyanate, and a hydroxyl group-containing (meth)acrylate; a bisphenol skeleton-containing (meth)acrylate; and a monofunctional (meth)acrylate in which a glass transition temperature of a homopolymer of the monofunctional (meth)acrylate is -60°C or more and 15°C or less; and when the resin composition is ultraviolet-cured under conditions of an accumulated amount of light of 1000 mJ/cm² and an illumination of 1000 mW/cm² to form a resin film, the Young's modulus of the resin film is 1200 MPa or more and 3000 MPa or less at 23°C, and the glass transition temperature of the resin film is 70°C or more and 105°C or less.

### Brief Description of Drawings

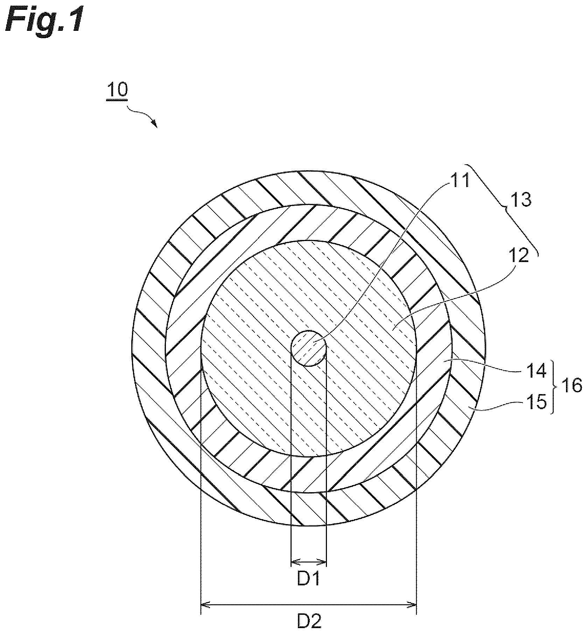

[Fig. 1] Fig. 1 is a schematic sectional view showing one example of an optical fiber according to the present embodiment.

### Description of Embodiments

### [Problem to be solved by the Present Disclosure]

Since a resin composition that can form a resin layer with a high Young's modulus has high viscosity, the coatability tends to decrease. As the Young's modulus of a secondary resin layer increases, the glass transition temperature (Tg) also increases, and when residual stress in the primary resin layer increases to change the temperature of the optical fiber (especially at low temperature), defects are caused in the primary resin layer, and the transmission loss easily increases.

An object of the present disclosure is to provide a resin composition for secondary coating that can improve the lateral pressure characteristic of an optical fiber, and reduce an increase in transmission loss due to temperature change, the optical fiber that is excellent in the lateral pressure characteristic and in which an increase in transmission loss due to temperature change is reduced, and a method for producing the optical fiber.

### [Effects of the Present Disclosure]

According to the present disclosure, a resin composition for secondary coating that can improve the lateral pressure characteristic of an optical fiber, and reduce an increase in transmission loss due to temperature change, the optical fiber that is excellent in the lateral pressure characteristic and in which an increase in transmission loss due to temperature change is reduced, and a method for producing the optical fiber can be provided.

### [Description of embodiments of the Present Disclosure]

First, the contents of the embodiments of the present disclosure will be listed and described. A resin composition for secondary coating of an optical fiber according to one embodiment of the present disclosure contains: a photopolymerizable compound and a photopolymerization initiator, the photopolymerizable compound contains a urethane (meth)acrylate that is a reaction product of a polyol having a number average molecular weight of 300 or more and 1200 or less, a diisocyanate, and a hydroxyl group-containing (meth)acrylate; a bisphenol skeleton-containing (meth)acrylate; and a monofunctional (meth)acrylate in which a glass transition temperature of a homopolymer of the monofunctional (meth)acrylate is -60°C or more and 15°C or less; and when the resin composition is ultraviolet-cured under conditions of an accumulated amount of light of 1000 mJ/cm² and an illumination of 1000 mW/cm² to form a resin film, the Young's modulus of the resin film is 1200 MPa or more and 3000 MPa or less at 23°C, and the glass transition temperature of the resin film is 70°C or more and 105°C or less.

Since such a resin composition can form a resin layer that is excellent in balance between the Young's modulus and Tg, the lateral pressure characteristic of the optical fiber can be improved, and an increase in transmission loss due to temperature change can be reduced.

The Young's modulus of the resin film may be 1550 MPa or more and 2500 MPa or less from the viewpoint of improving the lateral pressure characteristic of the optical fiber.

Since the secondary resin layer that is excellent in balance between the Young's modulus and Tg is easily formed, the Tg of the homopolymer of the monofunctional (meth)acrylate may be -40°C or more and 10°C or less.

Since the Young's modulus and the Tg of the secondary resin layer are easily adjusted, the monofunctional (meth)acrylate may contain a monofunctional (meth)acrylate having aromatic rings, the monofunctional (meth)acrylate may be at least one selected from phenoxyethyl acrylate, phenoxydiethylene glycol acrylate, m-phenoxybenzyl acrylate, and phenol EO-modified acrylate.

Since moderate toughness is imparted to the secondary resin layer, the content of the urethane (meth)acrylate is 5 parts by mass or more and 40 parts by mass or less, the content of the bisphenol skeleton-containing (meth)acrylate is 30 parts by mass or more and 60 parts by mass or less, and the content of the monofunctional (meth)acrylate is 2 parts by mass or more and 30 parts by mass or less, based on the total amount of the photopolymerizable compound of 100 parts by mass, and the content of the bisphenol skeleton-containing (meth)acrylate may be higher than the content of the urethane (meth)acrylate.

Since more moderate toughness is imparted to the secondary resin layer, the bisphenol skeleton-containing (meth)acrylate may contain bisphenol A epoxy diacrylate.

The optical fiber according to one aspect of the present disclosure comprises: a glass fiber including a core and a cladding; a primary resin layer coating the glass fiber in contact with the glass fiber; and a secondary resin layer coating the primary resin layer, and the secondary resin layer contains a cured product of the above-mentioned resin composition. Such an optical fiber can improve the lateral pressure characteristic, and can reduce an increase in transmission loss due to temperature change.

Since the lateral pressure characteristic of the optical fiber are further improved, the Young's modulus of the secondary resin layer may be 1200 MPa or more and 3000 MPa or less, and since an increase in the transmission loss of the optical fiber is further reduced, the glass transition temperature Tg of the optical fiber may be 70°C or more and 105°C or less. Since moderate toughness is imparted, the Young's modulus of the secondary resin layer may be 1400 MPa or more and 2500 MPa or less.

A method for producing the optical fiber according to one aspect of the present disclosure comprises: an application step of applying the above-mentioned resin composition to the periphery of the glass fiber including the core and the cladding, and a curing step of curing the resin composition by irradiation with ultraviolet rays after the application step. Therefore, the optical fiber that is excellent in the lateral pressure characteristic and in which an increase of transmission loss due to temperature change is reduced can be produced.

### [Details of the embodiments of the Present Disclosure]

Specific examples of the resin composition and the optical fiber according to the present embodiment will be described with reference to a drawing if needed. The present disclosure is not limited to this exemplification, is shown by the claims, and is intended to include all modifications in meanings and a scope equivalent to the claims. In the following descriptions, the same components are indicated with the same reference numeral, and the same descriptions are omitted in the description of the drawing.

### (Resin composition)

The resin composition according to the present embodiment contains the photopolymerizable compound, and the photopolymerization initiator.

The photopolymerizable compound according to the present embodiment contains a urethane (meth)acrylate that is a reaction product of a polyol having a number average molecular weight (Mn) of 300 or more and 1200 or less, a diisocyanate, and a hydroxyl group-containing (meth)acrylate; a bisphenol skeleton-containing (meth)acrylate; and a monofunctional (meth)acrylate in which the glass transition temperature of the homopolymer is -60°C or more and 15°C or less.

Here, a (meth)acrylate means an acrylate or a methacrylate corresponding thereto. Other similar expressions such as(meth)acrylic acid mean the corresponding compounds similarly. A urethane (meth)acrylate having bisphenol skeletons is included in urethane (meth)acrylates herein.

The urethane (meth)acrylate according to the present embodiment has a urethane structure based on the reaction of the polyol having an Mn of 300 or more and 1200 or less and the diisocyanate, and (meth)acryloyl groups bound to the terminals of the urethane structure. The urethane (meth)acrylate is a compound also called a urethane oligomer.

Examples of the polyol include polytetramethylene glycol, polyethylene glycol, polypropylene glycol, polyester polyols, polycaprolactone polyols, polycarbonate polyols, polybutadiene polyols, alkylene oxide adduct polyols of bisphenol A, alkylene oxide adduct polyols of bisphenol F, alkylene oxide adduct polyols of hydrogenated bisphenol A, and alkylene oxide adduct polyols of hydrogenated bisphenol F. The polyol may be used in combination of two or more, and the same type of polyols or different types of polyols having different Mn may be used in combination. Since a tough resin layer that is excellent in balance between the Young's modulus and the breaking elongation is easily formed, it is preferable to use polypropylene glycol, polycarbonate polyols, or alkylene oxide adduct polyols of bisphenol A as the polyol.

The Mn of the polyol is 300 or more, and may be 400 or more, or 500 or more from the viewpoint of adjusting the viscosity of the urethane (meth)acrylate, and the Mn is 1200 or less, and may be 1000 or less, or less than 800 from the viewpoint of increasing the Young's modulus.

Examples of the diisocyanate include 2,4-tolylene diisocyanate, 2,6-tolylene diisocyanate, isophorone diisocyanate, dicyclohexylmethane diisocyanate, diphenylmethane diisocyanate, hexamethylene diisocyanate, xylylene diisocyanate, hydrogenated xylylene diisocyanate, 1,5-naphthalene diisocyanate, norbornene diisocyanate, 1,5-pentamethylene diisocyanate, tetramethylxylylene diisocyanate, and trimethylhexamethylene diisocyanate.

Examples of the hydroxyl group-containing (meth)acrylate include 2-hydroxyethyl (meth)acrylate, 2-hydroxypropyl (meth)acrylate, 2-hydroxybutyl (meth)acrylate, caprolactone (meth)acrylate, 2-hydroxy-3-phenoxypropyl (meth)acrylate, 2-(meth)acryloyloxyethyl-2-hydroxyethyl phthalic acid, 2-hydroxy-O-phenylphenolpropyl (meth)acrylate, 2-hydroxy-3-methacrylpropyl acrylate, trimethylolpropane di(meth)acrylate, and pentaerythritol tri(meth)acrylate.

The urethane (meth)acrylate can be obtained by reacting the polyol and the diisocyanate at an NCO/OH of 1.5 or more and 4 or less to generate an intermediate having NCO at the terminals and then reacting the hydroxyl group-containing (meth)acrylate therewith.

As a catalyst when the urethane (meth)acrylate is synthesized, an organotin compound or an amine compound is used. Examples of the organotin compound include dibutyl tin dilaurate, dibutyl tin diacetate, dibutyl tin malate, dibutyl tin bis(2-ethylhexyl mercaptoacetate), dibutyl tin bis(isooctyl mercaptoacetate), and dibutyltin oxide. It is preferable to use dibutyl tin dilaurate or dibutyl tin diacetate as the catalyst with respect to the availability or the catalytic performance.

When the viscosity at the time of the synthesis of the urethane (meth)acrylate is high, the urethane (meth)acrylate may be synthesized in the presence of a monofunctional or polyfunctional (meth)acrylate. When the hydroxyl value of the monofunctional or polyfunctional (meth)acrylate at that time is 12.0 mg KOH/g or less, the gelation or the molecular weight distribution abnormality of the urethane (meth)acrylate is easily suppressed. The hydroxyl value can be measured based on JIS K0070.

Hereinafter, the preparation of the urethane (meth)acrylate will be described by giving a specific example. For example, polypropylene glycol is used as the polyol, 2,4-tolylene diisocyanate is used as the diisocyanate, and 2-hydroxyethyl acrylate is used as the hydroxyl group-containing (meth)acrylate. First, 2,4-tolylene diisocyanate is reacted with polypropylene glycol to synthesize an NCO terminal prepolymer. Then, 2-hydroxyethyl acrylate is reacted with the NCO terminal prepolymer to synthesize the urethane acrylate. The urethane acrylate can be represented by the following formula (1):

A-(U-I-U-P)n-U-A (1)

wherein A represents a 2-hydroxyethyl acrylate residue, U represents a urethane bond, I represents a 2,4-tolylene diisocyanate residue, P represents a polypropylene glycol residue, and n is an integer of 1 or more. With respect to n, the proportion of urethane bonds which the urethane acrylate has can be varied by changing the NCO/OH. As the NCO/OH decreases, the rate of the urethane acrylate having a large n increases, and as the NCO/OH increases, the rate of the urethane acrylate having a small n increases.

It is preferable that the Mn of the urethane (meth)acrylate be 500 or more and 4000 or less. When the Mn is 500 or more, a tough secondary resin layer is easily formed, and when the Mn is 4000 or less, the Young's modulus of the secondary resin layer is easily enhanced.

The bisphenol skeleton-containing (meth)acrylate according to the present embodiment is a polyfunctional monomer having a bisphenol skeleton and two or more (meth)acryloyl groups, and is a compound not having a urethane bond.

Examples of the bisphenol skeleton-containing (meth)acrylate include bisphenol A epoxy di(meth)acrylate, bisphenol F epoxy di(meth)acrylate, an EO adduct of bisphenol A di(meth)acrylate, an EO adduct of bisphenol F di(meth)acrylate, a PO adduct of bisphenol A di(meth)acrylate, and a PO adduct of bisphenol F di(meth)acrylate.

The epoxy di(meth)acrylate is a compound obtained by reacting a compound such as (meth)acrylic acid having (meth)acryloyl groups with an epoxy compound having two or more glycidyl groups. Since a tough resin layer in good balance between a high Young's modulus and the breaking elongation is easily formed, the bisphenol skeleton-containing (meth)acrylate may contain bisphenol A epoxy di(meth)acrylate or an EO adduct of bisphenol A di(meth)acrylate.

In the monofunctional (meth)acrylate according to the present embodiment, the Tg of the homopolymer consisting of only structural units based on the monofunctional (meth)acrylate is -60°C or more and 15°C or less. Since a resin layer in good balance between a high Young's modulus and a low Tg is easily formed, it is preferable that the Tg of the homopolymer of the monofunctional (meth)acrylate be -50°C or more and 10°C or less, it is more preferable that the Tg be -45°C or more and 10°C or less, and it is further preferable that the Tg be -40°C or more and 0°C or less.

Examples of the monofunctional (meth)acrylate according to the present embodiment include lauryl acrylate (Tg: -3°C), 2-(2-ethoxyethoxy)ethyl acrylate (Tg: -54°C), methoxytriethylene glycol acrylate (Tg: -50°C), tetrahydrofurfuryl acrylate (Tg: 10°C), isobutyl acrylate (Tg: -26°C), isoamyl acrylate (Tg: -45°C), methoxydipropylene glycol acrylate (Tg: 2°C), isobutyl acrylate (Tg: -26°C), isononyl acrylate (Tg: -58°C), isodecyl acrylate (Tg: -60°C), isostearyl acrylate (Tg: - 18°C), 2-methoxyethyl acrylate (Tg: -50°C), tridecyl acrylate (Tg: - 55°C), caprolactone acrylate (Tg: -53°C), 2-hydroxyethyl acrylate (Tg: - 15°C), 2-hydroxypropyl acrylate (Tg: -7°C), 2-acryloyloxyethyl succinate (Tg: -40°C), 2-ethylhexy methacrylate (Tg: -10°C), isodecyl methacrylate (Tg: -41°C), 2-acryloyloxyethyl succinate (Tg: -14°C), phenoxyethyl acrylate (Tg: -22°C), phenoxydiethylene glycol acrylate (Tg: -21°C), m-phenoxybenzyl acrylate (Tg: -35°C), benzyl acrylate (Tg: 6°C) biphenylmethyl acrylate (Tg: 6°C), phenol EO-modified (n = 2) acrylate (Tg: -8°C), phenol EO-modified (n ≅ 4) acrylate (Tg: -18°C), nonylphenol EO-modified (n = 4) acrylate (Tg: -20°C), nonylphenol EO-modified (n = 8) acrylate (Tg: -45°C), nonylphenol PO-modified (n = 2) acrylate (Tg: -20°C), and nonylphenol PO-modified (n = 2.5) acrylate (Tg: -3°C). Here, EO means ethylene oxide, and PO means propylene oxide, and n is the number of ethylene oxide units or propylene oxide units.

Since a resin layer in good balance between a high Young's modulus and a low Tg is easily formed, it is preferable to use a monofunctional (meth)acrylate having aromatic rings, and it is more preferable to use at least one selected from phenoxyethyl acrylate, phenoxydiethylene glycol acrylate, m-phenoxybenzyl acrylate, and phenol EO-modified (n ≅ 2) acrylate as the monofunctional (meth)acrylate according to the present embodiment.

It is preferable that the content of the urethane (meth)acrylate be 5 parts by mass or more and 40 parts by mass or less, it is more preferable that the content be 7 parts by mass or more and 30 parts by mass or less, and it is further preferable that the content be 10 parts by mass or more and 20 parts or less, based on the total amount of the photopolymerizable compound of 100 parts by mass. It is preferable that the content of the bisphenol skeleton-containing (meth)acrylate be 30 parts by mass or more and 60 parts by mass or less, it is more preferable that the content be 35 parts by mass or more and 55 parts by mass or less, and it is further preferable that the content be 40 parts by mass or more and 50 parts or less, based on the total amount of the photopolymerizable compound of 100 parts by mass. It is preferable for the content of the monofunctional (meth)acrylate in which the Tg of the homopolymer is -60°C or more and 15°C or less to be 2 parts by mass or more and 30 parts by mass or less, it is more preferable for the content to be 4 parts by mass or more and 25 parts by mass or less, and it is further preferable for the content to be 8 parts by mass or more and 20 parts by mass or less, based on the total amount of the photopolymerizable compound of 100 parts by mass. Since the Young's modulus of the secondary resin layer is easily increased, it is preferable that the content of the bisphenol skeleton-containing (meth)acrylate be higher than the content of the urethane (meth)acrylate.

The photopolymerizable compound according to the present embodiment may contain a monofunctional (meth)acrylate or a polyfunctional (meth)acrylate other than the urethane (meth)acrylate, the bisphenol skeleton-containing (meth)acrylate, and the monofunctional (meth)acrylate in which the Tg of the homopolymer is -60°C or more and 15°C or less.

Examples of the monofunctional (meth)acrylate include ethylene-diethylene glycol acrylate, isobornyl (meth)acrylate, 2-hydroxy-3-phenoxypropyl acrylate, n-stearyl methacrylate, cyclohexyl (meth)acrylate, tetrahydrofurfuryl methacrylate, benzyl methacrylate, 2-hydroxypropyl methacrylate, 2-ethylhexyl acrylate, t-butyl acrylate, n-octyl acrylate, N-acryloyloxyethyl hexahydro phthalimide, dicyclopentenyl acrylate, dicyclopentenyloxyethyl (meth)acrylate, dicyclopentanyl (meth)acrylate, trimethylcyclohexyl acrylate, 4-t-butylcyclohexyl acrylate, phenoxyethyl methacrylate, N-acryloyl morpholine, N-vinylpyrrolidone, N-vinylcaprolactam, N,N-dimethylacrylamide, N-hydroxyethylacrylamide, N,N-diethylacrylamide, N-isopropylacrylamide, N,N-dimethylaminopropylacrylamide, and (meth)acrylic acid.

Examples of the polyfunctional (meth)acrylate include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, triethylene glycol di(meth)acrylate, cyclohexanedimethanol di(meth)acrylate, dipropylene glycol di(meth)acrylate, tetraethylene glycol di(meth)acrylate, 1,3-butylene glycol di(meth)acrylate, 1,4-butanediol di(meth)acrylate, diethylene glycol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-haxadecanediol di(meth)acrylate, 1,20-eicosanediol di(meth)acrylate, isopentyldiol di(meth)acrylate, 3-ethyl-1,8-octanediol di(meth)acrylate, tricyclodecanol di(meth)acrylate, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

The photopolymerization initiator can be suitably selected from well-known radical photopolymerization initiators and used. Examples of the photopolymerization initiator include 1-hydroxycyclohexyl phenyl ketone (Omnirad 184, produced by IGM Resins B.V), 2,2-dimethoxy-2-phenyl acetophenone (Omnirad 651, produced by IGM Resins B.V), 2,4,6-trimethylbenzoyl diphenylphosphine oxide (Omnirad TPO, produced by IGM Resins B.V), ethyl(2,4,6-trimethylbenzoyl)-phenyl phosphinate (Omnirad TPO-L, produced by IGM Resins B.V), 2-benzoyl-2-dimethylamino-4'-morpholinobutyrophenone (Omnirad TPO369, produced by IGM Resins B.V), 2-dimethylamino-2-(4-methylbenzyl)-1-(4-morpholin-4-yl-phenyl)-butan-1-one (Omnirad TPO 379, produced by IGM Resins B.V), bis(2,4,6-trimethylbenzoyl)phenylphosphine oxide (Omnirad 819, produced by IGM Resins B.V), and 2-methyl-1-[4-(methylthio)phenyl]-2-morpholinopropan-1-one (Omnirad 907, produced by IGM Resins B.V.).

The photopolymerization initiator may be used as a mixture of two or more. It is preferable due to excellent rapid curability of the resin composition that the photopolymerization initiator contain 2,4,6-trimethylbenzoyldiphenylphosphine oxide.

It is preferable that the content of the photopolymerization initiator be 0.2 parts by mass or more and 5 parts by mass or less, it is more preferable that the content be 0.3 parts by mass or more and 4 parts by mass or less, and it is further preferable that the content be 0.4 parts by mass or more and 3 parts by mass or less, based on the total amount of the photopolymerizable compound.

The resin composition according to the present embodiment may further contain a photoacid generator, a leveling agent, an antifoaming agent, an antioxidant, and the like.

An onium salt having a structure of A⁺B⁻ may be used as the photoacid generator. Examples of the photoacid generator include sulfonium salts such as CPI-100P and 110P (produced by San-Apro Ltd.) and Omnicat 270 and 290 (produced by IGM Resins B.V); and iodonium salts such as Omnicat 250 (produced by IGM Resins B.V), WPI-113, 116, 124, 169, and 170 (produced by FUJIFILM Wako Pure Chemical Corporation).

It is preferable that the viscosity at 25°C of the resin composition according to the present embodiment be 0.5 Pa·s or more and 10 Pa·s or less, it is more preferable that the viscosity be 0.8 Pa·s or more and 9 Pa·s or less, and it is further preferable that the viscosity be 1 Pa·s or more and 7 Pa·s or less from the viewpoint of the coatability.

The Young's modulus of the resin film that is a cured product of the resin composition according to the present embodiment is 1200 MPa or more and 3000 MPa or less at 23°C from the viewpoint of improving the lateral pressure characteristic of the optical fiber, it is more preferable that the Young's modulus be 1350 MPa or more and 2500 MPa or less, and it is further preferable that the Young's modulus be 1550 MPa or more and 2200 MPa or less. The Tg of the resin film is 70°C or more and 105°C or less, it is more preferable that the Tg be 75°C or more and 100°C or less, and it is further preferable that the Tg be 80°C or more and 100°C or less from the viewpoint of suppressing an increase in transmission loss due to the temperature change of the optical fiber.

With respect to the resin film, the resin layer formed by applying the resin composition to a substrate such as a polyethylene terephthalate (PET) film can be cured using an electrodeless UV lamp system (D bulb, manufactured by Heraeus) under conditions of 1000 mJ/cm² and 1000 mW/cm² to produce a resin film having a thickness of 200 µm. The resin film is peeled from the substrate and evaluated.

The Young's modulus of the resin film can be calculated by dividing stress calculated from a stress-strain curve measured in a tensile test at 23 ± 2°C and 50 ± 10% RH by a secant expression at 2.5% strain by the cross section of the resin film. The Tg of the resin film can be calculated from the peak top temperature of tan δ measured in a dynamic viscoelasticity test.

### (Optical fiber)

Fig. 1 is a schematic sectional view showing one example of the optical fiber according to the present embodiment. An optical fiber 10 comprises a glass fiber 13 including a core 11 and a cladding 12 and a coating resin layer 16 including a primary resin layer 14 and a secondary resin layer 15 provided on the periphery of the glass fiber 13.

The cladding 12 surrounds the core 11. The core 11 and the cladding 12 mainly contain glass such as silica glass, and for example, germanium-added silica glass or pure silica glass can be used for the core 11, and pure silica glass or fluorine-added silica glass can be used for the cladding 12.

In Fig. 1, for example, the outer diameter of the glass fiber 13 (D2) is around 100 µm to 125 µm, and the diameter of the core 11 (D1), constituting the glass fiber 13, is around 7 µm to 15 µm. The thickness of the coating resin layer 16 is usually around 22 µm to 70 µm. The thickness of each layer of the primary resin layer 14 and the secondary resin layer 15 may be around 5 µm to 50 µm.

When the outer diameter of the glass fiber 13 is around 125 µm, and the thickness of the coating resin layer 16 is 60 µm or more and 70 µm or less, the thickness of each layer of the primary resin layer 14 and the secondary resin layer 15 may be around 10 µm to 50 µm, and, for example, the thickness of the primary resin layer 14 may be 35 µm, and the thickness of secondary resin layer 15 may be 25 µm. The outer diameter of the optical fiber 10 may be around 245 µm to 265 µm.

When the outer diameter of the glass fiber 13 is around 125 µm, and the thickness of the coating resin layer 16 is 24 µm or more and 48 µm or less, the thickness of each layer of the primary resin layer 14 and the secondary resin layer 15 may be around 8 µm to 38 µm, and, for example, the thickness of the primary resin layer 14 may be 25 µm, and the thickness of the secondary resin layer 15 may be 10 µm. The outer diameter of the optical fiber 10 may be around 173 µm to 221 µm.

When the outer diameter of the glass fiber 13 is around 100 µm, and the thickness of the coating resin layer 16 is 22 µm or more and 37 µm or less, the thickness of each layer of the primary resin layer 14 and the secondary resin layer 15 may be around 5 µm to 32 µm, and, for example, the thickness of the primary resin layer 14 may be 25 µm, and the thickness of the secondary resin layer 15 may be 10 µm. The outer diameter of the optical fiber 10 may be around 144 µm to 174 µm.

The optical fiber that is excellent in the lateral pressure characteristic and in which the transmission loss does not increase at low temperature can be produced by applying the resin composition according to the present embodiment to the secondary resin layer.

The method for producing the optical fiber according to the present embodiment comprises: an application step of applying the above-mentioned resin composition to the periphery of the glass fiber including the core and the cladding; and a curing step of curing the resin composition by irradiation with ultraviolet rays after the application step.

It is preferable that the Young's modulus of the secondary resin layer be 1200 MPa or more, it is more preferable that the Young's modulus be 1300 MPa or more, and it is further preferable that the Young's modulus be 1400 MPa or more at 23°C ± 2°C from the viewpoint of improving the lateral pressure characteristic of the optical fiber. Although the Young's modulus of the secondary resin layer is not particularly limited, the upper limit may be 3000 MPa or less, 2500 MPa or less, or 2200 MPa or less at 23°C ± 2°C from the viewpoint of imparting moderate toughness to the secondary resin layer.

It is preferable that the Tg of the secondary resin layer be 70°C or more, and it is more preferable that the Tg be 75°C or more from the viewpoint of improving the heat resistance of the secondary resin layer. It is preferable that the Tg be 105°C or less, and it is more preferable that the Tg be 95°C or less from the viewpoint of suppressing an increase in the transmission loss at low temperature of the optical fiber.

The Young's modulus of the secondary resin layer can be measured by the following method. First, the optical fiber is immersed in a mixed solvent of acetone and ethanol, and only the coating resin layer is extracted in a cylindrical shape. Although the primary resin layer and the secondary resin layer are united at this time, the Young's modulus of the primary resin layer is 1/1000 or more and 1/10000 or less of the Young's modulus of the secondary resin layer, the Young's modulus of the primary resin layer is therefore negligible. Next, the solvent is removed from the coating resin layer by vacuum drying, a tensile test (the tensile speed is 1 mm/minute) can be performed at 23°C, and the Young's modulus can be calculated by a secant expression at 2.5% strain.

The Tg of the secondary resin layer can be measured by the following method. First, an optical fiber is immersed in a mixed solvent of acetone and ethanol, and only the coating resin layer is extracted in a cylindrical shape. Next, the solvent is removed from the coating resin layer by vacuum drying, the dynamic viscoelasticity is then measured under the conditions of a tensile mode (gauge length: 25 mm), a frequency of 11 Hz, a rate of temperature increase of 5°C/minute, and the temperature range of 25°C to 150°C using an "RSA-G2" manufactured by TA instruments, and the peak top temperature of tan δ can be found as Tg. Since the Tg of the primary resin layer is usually 0°C or less, the Tg of the primary resin layer can be negligible.

The primary resin layer 14 can be formed by curing, for example, a resin composition containing a urethane (meth)acrylate, a (meth)acrylate compound other than the urethane (meth)acrylate, and a photopolymerization initiator. The resin composition that forms the primary resin layer has a constitution different from the resin composition for secondary coating. The resin composition for the primary coating can be prepared using a conventionally well-known technique.

It is preferable that the Young's modulus of the primary resin layer be 0.5 MPa or less. When the Young's modulus of the primary resin layer exceeds 0.5 MPa, external force is easily transmitted to the glass fiber, and the transmission loss increase due to microbending may rise.

A plurality of optical fibers may be paralleled and integrated with a resin for a ribbon to form an optical fiber ribbon. The resin composition according to the present disclosure can also be used as the resin for a ribbon. The lateral pressure characteristic when external force was applied to the optical fiber ribbon can be improved in the same way as the optical fiber thereby.

### Examples

Hereinafter, the results of evaluation tests using Examples and Comparative Examples according to the present disclosure will be shown, and the present disclosure will be described in further detail. The present invention is not limited to these Examples.

### [Synthesis of urethane acrylate]

### (A-1)

Polypropylene glycol having an Mn of 400 and isophorone diisocyanate (IPDI) were reacted at 60°C for 1 hour so that the molar ratio of NCO to OH (NCO/OH) was 2.0 to prepare an NCO-terminated prepolymer. As a catalyst, 200 ppm dibutyltin dilaurate was added with respect to the final total fed amount. Next, 2-hydroxyethyl acrylate (HEA) was added so that the molar ratio of the OH of HEA to the NCO of the NCO terminal prepolymer was 1.05, and the mixture was reacted at 60°C for 1 hour to obtain a urethane acrylate (A-1).

### (A-2)

A urethane acrylate (A-2) was obtained in the same way as in the synthesis of (A-1) except that polypropylene glycol having an Mn of 600 and 2,4-tolylene diisocyanate (TDI) were reacted at an NCO/OH of 2.0 to prepare an NCO-terminated prepolymer.

### (A-3)

A urethane acrylate (A-3) was obtained in the same way as in the synthesis of (A-1) except that polypropylene glycol having an Mn of 700 and TDI were reacted at an NCO/OH of 2.0 to prepare an NCO-terminated prepolymer.

### (A-4)

A urethane acrylate (A-4) was obtained in the same way as in the synthesis of (A-1) except that polypropylene glycol having an Mn of 1000 and TDI were reacted at an NCO/OH of 2.0 to prepare an NCO-terminated prepolymer.

### (A-5)

A urethane acrylate (A-5) was obtained in the same way as in the synthesis of (A-1) except that tripropylene glycol diacrylate having a hydroxyl value of 6.1 mg KOH/g, an alkylene oxide-added polyol of bisphenol A having an Mn of 400 (produced by Sanyo Chemical Industries, Ltd., NEWPOL BPE-40), and TDI were reacted at 60°C for 1 hour to prepare an NCO-terminated prepolymer. The tripropylene glycol diacrylate was fed so that the amount thereof was 40% by mass based on the final total fed amount at the time of the synthesis, and the TDI and the polyol were fed so that the NCO/OH was 2.0.

### (B-1)

A urethane acrylate (B-1) was obtained in the same way as in the synthesis of (A-1) except that polypropylene glycol having an Mn of 2000 and TDI were reacted at an NCO/OH of 2.0 to prepare an NCO-terminated prepolymer.

### (Z-1)

A urethane acrylate (Z-1) was obtained in the same way as in the synthesis of (A-1) except that polypropylene glycol having an Mn of 4000 and IPDI were reacted at an NCO/OH of 1.5 to prepare an NCO-terminated prepolymer.

As the bisphenol skeleton-containing diacrylate, bisphenol A epoxy di(meth)acrylate (produced by OSAKA ORGANIC CHEMICAL INDUSTRY LTD., Viscoat#540) and an EO adduct of bisphenol A diacrylate (produced by OSAKA ORGANIC CHEMICAL INDUSTRY LTD., Viscoat#700) were provided.

As the monofunctional (meth)acrylate, compounds of M-1 to M-8, shown in Table 1, were provided. As the polyfunctional (meth)acrylate, tripropylene glycol diacrylate (TPGDA) was provided.

**[Table 1]**

| Monofunctional (meth)acrylate | | Tg (°C) of homopolymer |
|---|---|---|
| M-1 | Phenoxyethyl acrylate | -22 |
| M-2 | Phenoxydiethylene glycol acrylate | -21 |
| M-3 | m-Phenoxybenzyl acrylate | -35 |
| M-4 | Phenol EO-modified (n ≅ 2) acrylate | -8 |
| M-5 | 2-(2-ethoxyethoxy)ethyl acrylate | -54 |
| M-6 | Isodecyl acrylate | -60 |
| M-7 | Isobornyl acrylate | 94 |
| M-8 | 2-Ethylhexyl acrylate | -70 |

As the photopolymerization initiator, 2,4,6-trimethylbenzoyl diphenylphosphine oxide (Omnirad TPO) and 1-hydroxycyclohexyl phenyl ketone (Omnirad 184) were provided.

### [Resin composition for secondary coating]

Resin compositions for secondary coating of the Examples and the Comparative Examples having blended amounts (part by mass) shown in Table 2 or Table 3 were produced.

### (Viscosity of resin composition for secondary coating)

The viscosity at 25°C of the resin composition was measured under conditions of spindle: No. 18 and the number of revolutions: 10 rpm using a Brookfield type viscometer ("digital viscometer DV-II" manufactured by Brookfield).

### [Production of resin film]

Each resin composition was applied to a polyethylene terephthalate (PET) film using a spin coater and then cured under the conditions of 1000 mJ/cm² and 1000 mW/cm² using an electrodeless UV lamp system (D bulb, produced by Heraeus) to form a resin film having a thickness of 200 µm on the PET film. The resin film was peeled from the PET film, and the resin film was obtained.

### (Young's modulus of resin film)

The resin film was punched in a dumb-bell shape of JIS K 7127 type 5 and stretched under the conditions of 23 ± 2°C and 50 ± 10% RH using a tensile tester under the conditions of a tensile speed of 1 mm/minute and a gauge length of 25 mm to obtain a stress-strain curve. The Young's modulus of the resin film was calculated by dividing stress calculated by a secant expression at 2.5% strain by the cross section of the resin film.

### (Tg of resin film)

Each resin film was measured for the dynamic viscoelasticity using an "RSA-G2", manufactured by TA instruments, under the conditions of a tensile mode (gauge length: 25 mm), a frequency of 11 Hz, a rate of temperature increase of 5°C/minute, and the temperature range of 0°C to 150°C. The peak top temperature of the measured tan δ was defined as Tg.

### (Resin composition for primary coating)

First, 70 parts by mass of the urethane acrylate (Z-1), 19 parts by mass of nonylphenol EO-modified (n = 4) acrylate, 10 parts by mass of isobornyl acrylate, and 1 part by mass of Omnirad TPO were mixed to obtain a resin composition for primary coating.

### [Production of optical fibers]

The resin composition for primary coating and each resin composition for secondary coating were applied to the peripheral surface of the glass fiber 13 having a diameter of 125 µm. Subsequently, the resin compositions were cured by irradiation with ultraviolet rays, the coating resin layer 16 comprising the primary resin layer 14 and the secondary resin layer 15 was formed to produce the optical fiber 10. The thickness of the primary resin layer 14 was adjusted to 17.5 µm, and the thickness of the secondary resin layer 15 was adjusted to 20 µm. Since the resin composition of Comparative Example 7 had high viscosity, and the application thereof was difficult, an optical fiber was not able to be obtained.

### (Young's moduli of secondary resin layers)

Each optical fiber was immersed in a mixed solvent of acetone and ethanol, and only the coating resin layer was extracted in a cylindrical shape. Next, the solvent was removed from the coating resin layer by vacuum drying, a tensile test (the tensile speed was 1 mm/minute) was then performed at 23°C, and the Young's modulus was calculated by a secant expression at 2.5% strain.

### (Tg of secondary resin layer)

Each optical fiber was immersed in a mixed solvent of acetone and ethanol, and only the coating resin layer was extracted in a cylindrical shape. Next, the solvent was removed from the coating resin layer by vacuum drying, and the dynamic viscoelasticity was then measured under the conditions of a tensile mode (gauge length: 25 mm), a frequency of 11 Hz, a rate of temperature increase of 5°C/minute, the temperature range of 25°C to 150°C using an "RSA-G2", manufactured TA instruments, and the peak top temperature of tan δ was defined as Tg.

### (Lateral pressure characteristic)

The transmission loss of light at a wavelength of 1550 nm when the optical fiber 10 was wound around a bobbin that had a diameter of 280 mm and the surface of which was covered with sandpaper in a monolayer form was measured by an OTDR (optical time domain reflectometer) method. If the difference in the transmission loss of light at a wavelength of 1550 nm when the optical fiber 10 was wound around a bobbin having a diameter of 280 mm without sandpaper in a monolayer form was less than 0.4 dB/km, the optical fiber was evaluated as "A"; if the difference was 0.4 dB/km or more and 0.6 dB/km or less, the optical fiber was evaluated as "B"; and if the difference exceeded 0.6 dB/km, the optical fiber was evaluated as "C".

### (Heat cycle test)

First, 50 heat cycles were applied to each optical fiber with a heat cycle defined as a cycle between -40°C to 23°C (each of the temperatures was maintained for 1 hour, and the transition time was 1 hour), the transmission loss of light at a wavelength of 1550 nm was measured by an OTDR method under each temperature condition of 23°C and -40°C. If the difference in transmission loss calculated by subtracting the transmission loss at 23°C from the transmission loss at -40°C was less than 0 dB/km, the optical fiber was evaluated as "A"; if the difference was 0 dB/km or more and less than 0.01 dB/km, the optical fiber was evaluated as "B"; and if the difference was 0.01 dB/km or more, the optical fiber was evaluated as "C".

**[Table 2]**

| Example | | 1 | 2 | 3 | 4 | 5 | 6 | 7 | 8 | 9 | 10 | 11 | 12 | 13 |
|---|---|---|---|---|---|---|---|---|---|---|---|---|---|---|
| Resin composition | A-1 | 15 | | | | | | | | | | | | |
| | A-2 | | 15 | | | | 8 | 25 | 37 | 15 | 15 | 15 | 15 | 15 |
| | A-3 | | | 15 | | | | | | | | | | |
| | A-4 | | | | 15 | | | | | | | | | |
| | A-5 | | | | | 15 | | | | | | | | |
| | B-1 | | | | | | | | | | | | | |
| | Viscoat #540 | 50 | 50 | 50 | 50 | 40 | 40 | 40 | 30 | 40 | 40 | 40 | 40 | 40 |
| | Viscoat #700 | | | | | 15 | | | 10 | 10 | 10 | 10 | 10 | 10 |
| | M-1 | 20 | 20 | 20 | 20 | 10 | 15 | 10 | 5 | | | | | |
| | M-2 | | | | | | | | | 20 | | | | |
| | M-3 | | | | | | | | | | 20 | | | |
| | M-4 | | | | | | | | | | | 20 | | |
| | M-5 | | | | | | | | | | | | 20 | |
| | M-6 | | | | | | | | | | | | | 20 |
| | TPGDA | 15 | 15 | 15 | 15 | 20 | 37 | 25 | 18 | 15 | 15 | 15 | 15 | 15 |
| | Omnirad TPO | 1 | 1 | 1 | 1 | 1 | 1 | 1 | 1 | 1 | 1 | 1 | 1 | 1 |
| | Omnirad 184 | 1 | 1 | 1 | 1 | 1 | 1 | 1 | 1 | 1 | 1 | 1 | 1 | 1 |
| | Viscosity (Pa.s) | 3.0 | 2.5 | 2.6 | 2.8 | 5.5 | 0.6 | 4.5 | 8.1 | 3.1 | 2.5 | 2.6 | 1.4 | 1.4 |
| | Young's modulus (MPa) | 1840 | 2090 | 1850 | 1640 | 2100 | 1870 | 1820 | 1570 | 1720 | 1970 | 1760 | 1330 | 1520 |
| | Tg (°C) | 85 | 87 | 86 | 86 | 95 | 94 | 90 | 90 | 81 | 80 | 79 | 73 | 85 |
| Optical fiber | Young's modulus (MPa) | 1800 | 2010 | 1820 | 1590 | 2090 | 1850 | 1790 | 1550 | 1670 | 1950 | 1720 | 1220 | 1390 |
| | Tg (°C) | 82 | 85 | 84 | 84 | 94 | 92 | 88 | 86 | 80 | 78 | 77 | 70 | 80 |
| | Lateral pressure characteristic | A | A | A | A | A | A | A | A | A | A | A | B | B |
| | Heat cycle test | A | A | A | A | A | A | A | A | A | A | A | A | A |

**[Table 3]**

| Comparative Example | | 1 | 2 | 3 | 4 | 5 | 6 | 7 |
|---|---|---|---|---|---|---|---|---|
| | A-2 | 15 | | | | | | 15 |
| | A-4 | | 15 | | | | | |
| | B-1 | | | 15 | 15 | 15 | 15 | |
| | Viscoat #540 | 50 | 50 | 40 | 40 | 40 | 40 | 50 |
| | Viscoat #700 | | | 10 | 10 | 10 | 10 | 20 |
| | M-1 | | | | 10 | | | |
| | M-7 | | | | | 10 | | |
| | M-8 | | | | | | 10 | |
| | TPGDA | 35 | 35 | 35 | 25 | 25 | 25 | 15 |
| | Omnirad TPO | 1 | 1 | 1 | 1 | 1 | 1 | 1 |
| | Omnirad 184 | 1 | 1 | 1 | 1 | 1 | 1 | 1 |
| | Viscosity (Pa.s) | 4.7 | 5.2 | 4.0 | 3.3 | 4.0 | 3.8 | 12.4 |
| | Young's modulus (MPa) | 1800 | 1640 | 1110 | 1170 | 1290 | 990 | 2130 |
| | Tg (°C) | 110 | 112 | 111 | 97 | 119 | 101 | 104 |
| Optical fiber | Young's modulus (MPa) | 1760 | 1600 | 1060 | 1150 | 1240 | 880 | - |
| | Tg (°C) | 108 | 110 | 109 | 96 | 117 | 94 | - |
| | Lateral pressure characteristic | A | A | C | C | B | C | - |
| | Heat cycle test | C | C | C | B | C | A | - |

### Reference Signs List

10: Optical Fiber
11: Core
12: Cladding
13: Glass Fiber
14: Primary Resin Layer
15: Secondary Resin Layer
16: Coating Resin Layer

## Claims

1. A resin composition for secondary coating of an optical fiber, the composition comprising a photopolymerizable compound and a photopolymerization initiator,
wherein the photopolymerizable compound comprises a urethane (meth)acrylate that is a reaction product of a polyol having a number average molecular weight of 300 or more and 1200 or less, a diisocyanate, and a hydroxyl group-containing (meth)acrylate; a bisphenol skeleton-containing (meth)acrylate; and a monofunctional (meth)acrylate in which a glass transition temperature of a homopolymer of the monofunctional (meth)acrylate is -60°C or more and 15°C or less, and
when the resin composition is ultraviolet-cured under conditions of an accumulated amount of light of 1000 mJ/cm² and an illumination of 1000 mW/cm² to form a resin film, a Young's modulus of the resin film is 1200 MPa or more and 3000 MPa or less at 23°C, and a glass transition temperature of the resin film is 70°C or more and 105°C or less.

2. The resin composition according to claim 1, wherein the Young's modulus of the resin film is 1550 MPa or more and 2500 MPa or less.

3. The resin composition according to claim 1 or claim 2, wherein the glass transition temperature of the homopolymer is -40°C or more and 10°C or less.

4. The resin composition according to any one of claim 1 to claim 3, wherein the monofunctional (meth)acrylate comprises a monofunctional (meth)acrylate having an aromatic ring.

5. The resin composition according to claim 4, wherein the monofunctional (meth)acrylate is at least one selected from phenoxyethyl acrylate, phenoxydiethylene glycol acrylate, m-phenoxybenzyl acrylate, and phenol EO-modified acrylate.

6. The resin composition according to any one of claim 1 to claim 5, wherein a content of the urethane (meth)acrylate is 5 parts by mass or more and 40 parts by mass or less, a content of the bisphenol skeleton-containing (meth)acrylate is 30 parts by mass or more and 60 parts by mass or less, and a content of the monofunctional (meth)acrylate is 2 parts by mass or more and 30 parts by mass or less, based on a total amount of the photopolymerizable compound of 100 parts by mass, and
the content of the bisphenol skeleton-containing (meth)acrylate is higher than the content of the urethane (meth)acrylate.

7. The resin composition according to any one of claim 1 to claim 6, wherein the bisphenol skeleton-containing (meth)acrylate comprises bisphenol A epoxy di(meth)acrylate.

8. An optical fiber, comprising:
a glass fiber comprising a core and a cladding;
a primary resin layer coating the glass fiber in contact with the glass fiber; and
a secondary resin layer coating the primary resin layer,
wherein the secondary resin layer comprises a cured product of the resin composition according to any one of claim 1 to claim 7.

9. The optical fiber according to claim 8, wherein a Young's modulus of the secondary resin layer is 1200 MPa or more and 3000 MPa or less at 23°C, and a glass transition temperature of the secondary resin layer is 70°C or more and 105°C or less.

10. The optical fiber according to claim 8, wherein a Young's modulus of the secondary resin layer is 1400 MPa or more and 2500 MPa or less.

11. A method for producing an optical fiber, the method comprising:
an application step of applying the resin composition according to any one of claim 1 to claim 7 to a periphery of a glass fiber comprising a core and a cladding; and
a curing step of curing the resin composition by irradiation with ultraviolet rays after the application step.
